Europäisches Patentamt

European Patent Office

Office européen des brevets

(19)

(11) Numéro de publication: **0 058 597**
**B2**

(12) ## NOUVEAU FASCICULE DE BREVET EUROPÉEN

(45) Date de publication du nouveau fascicule du brevet:
04.02.87

(51) Int. Cl.⁴: **C 02 F 5/10, E 21 B 43/27**

(21) Numéro de dépôt: **82400193.7**

(22) Date de dépôt: **04.02.82**

(54) Solutions aqueuses acides épaissies et leur application notamment pour le détartrage.

(30) Priorité: **09.02.81 FR 8102506**

(43) Date de publication de la demande:
**25.08.82 Bulletin 82/34**

(45) Mention de la délivrance du brevet:
**04.07.84 Bulletin 84/27**

(45) Mention de la decision concernant l'opposition:
**04.02.87 Bulletin 87/6**

(84) Etats contractants désignés:
**AT BE CH DE FR GB IT LI NL**

(56) Documents cité:
**DE-B-1 806 594**
**FR-A-1 489 341**
**FR-A-2 280 025**
**US-A-3 099 636**
**US-A-4 103 742**
**US-A-4 231 882**

**Chem. Abstracts, Vol. 81, Ref. No. 17372 (1974) über Jap. 7405511**

(73) Titulaire: **SOCIETE FRANCAISE HOECHST Société anonyme dite:, 3, avenue du Général de Gaulle, F-92800 Puteaux (FR)**

(72) Inventeur: **Siegel, Daniel, 4, rue des Sabliéres, F-78360 Montesson (FR)**
Inventeur: **Soreau, Michel, 4, Jardins du Mont Griffard, F-95160 Montmorency (FR)**

(74) Mandataire: **Rinuy, Guy, Cabinet Rinuy et Santarelli 14, Avenue de la Grande Armée, F-75017 Paris (FR)**

EP 0 058 597 B2

## Description

La présente invention concerne des solutions aqueuses acides épaissies et leur application, notamment pour le détartrage.

Des solutions aqueuses d'acide(s) minéral(aux) telles que des solutions aqueuses d'acide chlorhydrique sont utilisées depuis longtemps pour le détartrage ménager, particulièrement pour le détartrage des appareils sanitaires ainsi que dans la récupération assistée du pétrole lors de certaines opérations d'acidification et de fracturation de formations souterraines pétrolifères. Ces solutions aqueuses acides fluides présentant une viscosité sensiblement égale à celle de l'eau étaient dangereuses à manipuler et convenaient médiocrement pour ces applications, aussi ont-elles été progressivement remplacées soit par des produits solides, en poudre ou en granulés, soit par des compositions épaissies d'acide(s) minéral(aux) ou organique(s) protoniques. Pour ce faire, divers agents épaississants insensibles aux acides ont été préconisés tels que des amines grasses éthoxylées selon les brevets français n° 2 207 984 et 2 415 139, des dérivés du silicium comme par exemple la palygorskite ou la sépiolite selon la demande de brevet japonais n° Kokai 78-139606, des polymères anioniques possédant des groupements sulfo comme par exemple le sel d'ammonium d'un acide α-sulfo ω-octadécyloxypoly (oxy-1,2 éthylène) selon la demande de brevet japonais n° Kokai 76-35681 ou des homopolymères de l'acide acrylamido-2 méthyl-2 méthyl-2 propane-sulfonique selon le brevet des Etats-Unis d'Amérique n° 3 931 089.

Mais ces divers épaississants présentent encore un certain nombre d'inconvénients. Ainsi, les amines grasses éthoxylées utilisées dans les brevets français n° 2 207 984 et 2 415 139 sont fréquemment difficiles à disperser dans ces milieux acides et elles nécessitent souvent un effort considérable de mélange et/ou d'agitation pour développer leur pleine efficacité. Les dérivés du silicium tels que la palygorskite ou la sépiolite sont connus comme susceptibles de libérer lentement de la silice gélatineuse lorsqu'ils sont utilisés sous certaines conditions de températures et de pH acide. Les polymères anioniques possédant dans leur structure un ou plusieurs groupements sulfo, libres ou salifiés, sont des produits onéreux et ils présentent très souvent une incompatibilité avec les bactéricides de type ammonium quaternaire utilisés pour la conservation des solutions aqueuses acides épaissies.

Les polymères cationiques hydrosolubles dérivés d'esters de l'acide (méth)acrylique sont des agents épaississants connus, mais ils étaient reconnus inaptes à l'épaississement de solutions aqueuses acides présentant un pH inférieur ou égal à 2, vraisemblablement du fait de leur dégradation par hydrolyse dans ces milieux. Ces polymères cationiques hydrosolubles abondamment répandus dans le commerce pour leur utilisation dans le traitement des eaux sont disponibles et nettement moins onéreux que les polymères anioniques précédemment cités. De plus, ils ne présentent aucune incompatibilité avec les bactéricides de type ammonium quaternaire.

Par ailleurs, il est connu d'utiliser dans des procédés de réduction du frottement des polymères cationiques hydrosolubles contenant du diméthylaminométhylacrylamide. Ces polymères présentent une bonne viscosité dans l'eau dans un large intervalle de pH, même à très bas pH (demande de brevet français 2 280 025). Mais ces polymères qui sont des bases de Mannich de polyacrylamide se réticulent lentement en solution aqueuse au cours du temps en fournissant des produits insolubles (demande de brevet japonais 50 (75)-16745).

Le US-A- 3 099 636 décrit une solution aqueuse d'un polymère hydrosoluble à base d'un sel d'un méthacrylate de mono- ou de dialkyl- (en $C_1$-$C_4$) aminoéthyle qui présente en solution aqueuse à 1 % en poids une viscosité Brookfield déterminée à 25°C et à 20 tours par minute (t.p.m) d'au moins 500 mPa.s, ainsi que son application comme agent épaississant.

Or, la Demandresse a trouvé d'une manière tout à fait inattendue et ce, contrairement à tous les enseignements admis, de nouvelles solutions aqueuses acides épaissies, de concentration pondérale en acide(s) comprises entre 2 et 30 %, de pH inférieur ou égal à 2, présentant une viscosité supérieure à 1 mPa.s, déterminée à 20°C avec un viscosimètre de Brookfield, modèle RVT, équipé d'un axe convenable tournant à la vitesse de 50 tr/min, caractérisées par le fait qu'elles sont épaissies par l'homopolymère du méthacrylate de diméthylaminoéthyle salifié par l'acide chlorhydrique. Généralement, ces solutions aqueuses acides épaissies sont des solutions fluides, présentant une viscosité comprise entre 20 et 2500 mPa.s et avantageusement comprise entre 40 et 2500 mPa.s déterminée selon les conditions précédemment citées.

Selon l'invention, ces nouvelles solutions aqueuses acides épaissies sont notamment des solutions aqueuses d'acide(s) minéral(aux) ou organique(s) tels que l'acide chlorhydrique, l'acide sulfurique, l'acide fluorhydrique, l'acide orthophosphorique, l'acide sulfamique, l'acide formique, l'acide acétique, l'acide oxalique, l'acide citrique, l'acide tartrique, l'acide succinique, l'acide malique, l'hydrogénosulfate de sodium, l'hydrogénodifluorure d'ammonium, etc. ou des mélanges de ces acides.

La concentration en acide ou en mélange d'acides dans ces solutions aqueuses épaissies est inférieure ou égale à 30 % en poids et elle est telle que le pH résultant est inférieur ou égal à 2.

L'homopolymère du méthacrylate de diméthylaminoéthyle salifié par l'acide chlorhydrique sera désigné par la suite homopolymère CHM. De préférence l'homopolymère appliqué selon l'invention aura une viscosité intrinsèque comprise entre 4 et 6 dl/g déterminée en solution molaire de NaCl à 25°C.

Selon l'invention, les concentrations en homopolymère CHM dans les solutions aqueuses acides épaissies sont fonction de la viscosité désirée. Il est aisé de déterminer par quelques essais préliminaires les quantités nécessaires d'homopolymère CHM pour obtenir la viscosité choisie.

Ainsi, pour obtenir des solutions aqueuses acides épaissies, fluides, présentant une viscosité inférieure à

2

2500 mPa.s, déterminée à 20 °C avec un viscosimètre de Brookfield, modèle RVT, équipé d'un axe convenable tournant à 50 tours par minute, il est nécessaire d'utiliser, au maximum, 4 g d'homopolymère CHM pur pour 100 g de solution aqueuse acide; mais, il est possible d'obtenir des solutions aqueuses acides gélifiées, possédant des viscosités nettement plus élevées, pouvant atteindre 20 000 mPa.s, en utilisant des quantités pius importantes d'homopolymère CHM.

Les solutions aqueuses épaissies, selon l'invention, présentent une viscosité stable dans le temps, indépendante du pH, de la nature de l'acide, et de la température dans une gamme de températures de stockage et d'utilisation habituelles des solutions aqueuses acides épaissies. Ces propriétés sont d'autant plus étonnantes qu'il est connu que les polymères cationiques hydrosolubles à base d'esters de l'acide méthacrylique sont sensibles à l'hydrolyse acide.

Les viscosités des solutions acides épaissies, selon l'invention, sont sensibles à la présence éventuelle d'électrolyte(s) dissous, notamment à la présence de chlorure de sodium. La présence de chlorure de sodium dissous dans ces solutions aqueuses acides épaissies abaisse légèrement leur viscosité et leur stabilité dans le temps mais augmente leur limpidité. Pour certaines applications, telles que leur emploi dans la récupération assistée du pétrole, cette propriété est intéressante puisqu au fur et à mesure que ces solutions se chargent en sels minéraux dissous au cours de leur progression dans le terrain, leur fluidité augmente, facilitant ainsi leur diffusion dans les fissures.

Ces solutions aqueuses acides épaissies présentant, simultanément un pH inférieur ou égal à 2 et une concentration pondérale en acide(s) inférieure à 30%, sont aisément obtenues en mélangeant à la température ambiante, sous agitation en dix minutes environ, une solution aqueuse acide contenant la quantité nécessaire d'acide ou du mélange d'acides désirés avec une solution aqueuse contenant la quantité calculée d'homopolymère CHM et éventuellement du chlorure de sodium et/ou d'autres additifs nécessaires à leur formulation.

Les additifs éventuels nécessaires à la formulation sont, par exemple, des colorants, des parfums, des désinfectants, etc.

La présente invention a également pour objet une application industrielle de ces nouvelles solutions aqueuses acides épaissies.

Grâce à leur pH inférieur ou égal à 2, à leur stabilité dans le temps, à leur insensibilité à des températures pouvant atteindre 80 °C, à leur limpidité et à leur viscosité élevée, habituellement comprise entre 40 et 2500 mPa.s déterminée selon les conditions précédemment citées, ces solutions aqueuses acides épaissies, selon l'invention, conviennent particulièrement bien au détartrage industriel ou ménager et aux opérations d'acidifications et de fracturations de formations souterraines contenant du pétrole. Ces propriétés sont dues à leur bonne adhérence aux surfaces verticales améliorant leurs temps de contact donc leur efficacité, à leur acidité élevée et à leur sécurité d'emploi par diminution des risques de projection.

## Exemples

Les tableaux suivants indiquent les viscosités obtenues, exprimées en millipascals-secondes (mPa.s) et déterminées selon les conditions citées précédemment, de différentes solutions aqueuses acides épaissies objet de la présente invention avec diverses concentrations en homopolymère CHM, en présence ou non de chlorure de sodium.

Ces tableaux mentionnent aussi des viscosités de ces solutions après une durée de stockage variable à différentes températures comprises entre 0 et 60°C.

L'homopolymère CHM mentionné dans les tableaux 1 à 3 et 7 à 11 était un homopolymère présentant une viscosité intrinsèque de 4,75 dl/g déterminée en solution molaire de NaCl à 25 °C, alors que celui des tableaux 4, 5 et 6 présentait une viscosité intrinsèque de 5,25 dl/g.

(Voir tableaux pages suivantes)

1. Solutions aqueuses d'acide chlorhydrique à 2 % en poids

| Tableau 1 | | Viscosités (mPa.s) | | |
|---|---|---|---|---|
| Durées | Homopolymère CHM en g pour 100 g Températures | 1,2 | 2,4 | 3,6 |
| 0 | 20°C | 90 | 610 | 1600 |
| 114 jours | à 0°C | 90 | 620 | 1590 |
| | à 20°C | 90 | 610 | 1580 |
| | à 40°C | 90 | 590 | 1560 |
| Aspect | | limpide | très légère- ment trouble | très légère- ment trouble |

2. Solutions aqueuses d'acide chlorhydrique à 10 % en poids

| Tableau 2 | | Viscosités (mPa.s) | | |
|---|---|---|---|---|
| Durées | Homopolymère CHM en g pour 100 g Températures | 1,2 | 2,4 | 3,6 |
| 0 | 20°C | 110 | 530 | 1720 |
| 93 jours | 0°C | 110 | 600 | 1720 |
| | 20°C | 100 | 500 | 1530 |
| | 40°C | 110 | 600 | 1770 |
| | 60°C | 100 | 500 | 1600 |
| Aspect | | limpide | limpide | limpide |

4

3. Solutions aqueuses d'acide chlorhydrique à 25 % en poids

| Tableau 3 | | Viscósités (mPa.s) | | |
|---|---|---|---|---|
| Durées | Homopolymère CHM en g pour 100 g / Températures | 1,2 | 2,4 | 3,6 |
| 0 | 20°C | 160 | 860 | 2380 |
| 110 jours | 0°C | 180 | 740 | 2320 |
| | 20°C | 120 | 650 | 2130 |
| | 40°C | 100 | 540 | 1880 |
| Aspect | | légèrement trouble | légèrement trouble | légèrement trouble |

4. Solutions aqueuses d'acide sulfurique à 2 % en poids

| Tableau 4 | | Viscosités (mPa.s) | | |
|---|---|---|---|---|
| Durées | Homopolymère CHM en g pour 100 g / Températures | 1,2 | 2,4 | 3,6 |
| 0 | 20°C | 100 | 610 | 1860 |
| 114 jours | 0°C | 100 | 610 | 1860 |
| | 20°C | 100 | 610 | 1840 |
| | 40°C | 100 | 590 | 1770 |
| Aspect | | limpide | légèrement trouble | légèrement trouble |

5. Solutions aqueuses d'acide sulfurique à 10 % en poids

| Tableau 5 | | Viscosités (mPa.s) | | |
|---|---|---|---|---|
| Homopolymère CHM en g pour 100 g | | 1,2 | 2,4 | 3,6 |
| Durées | Températures | | | |
| 0 | 20°C | 100 | 590 | 1570 |
| 93 jours | 0°C | 100 | 590 | 1570 |
| | 20°C | 110 | 590 | 1500 |
| | 40°C | 110 | 590 | 1480 |
| Aspect | | limpide | limpide | limpide |

6. Solutions aqueuses d'acide sulfurique à 25 % en poids

| Tableau 6 | | Viscosités (mPa.s) | | |
|---|---|---|---|---|
| Homopolymère CHM en g pour 100 g | | 1,2 | 2,4 | 3,6 |
| Durées | Températures | | | |
| 0 | 20°C | 130 | 780 | 2360 |
| 110 jours | 0°C | 150 | 820 | 2440 |
| | 20°C | 150 | 720 | 2230 |
| | 40°C | 130 | 740 | 2220 |
| Aspect | | légèrement laiteux | légèrement laiteux | légèrement laiteux |

**7. Solutions aqueuses d'acide chlorhydrique à 2 % en poids et contenant du chlorure de sodium**

| Tableau 7 | | Viscosités (mPa.s) | | |
|---|---|---|---|---|
| Homopolymère CHM en g pour 100 g | | 1,2 | 2,4 | 3,6 |
| | ClNa en g pour 100 g | 0,6 | 1,2 | 1,8 |
| Durées | Températures | | | |
| 0 | 20°C | 50 | 170 | 450 |
| 114 jours | 0°C | 50 | 150 | 460 |
| | 20°C | 40 | 160 | 450 |
| | 40°C | 40 | 160 | 440 |
| Aspect | | limpide | limpide | limpide |

**8. Solutions aqueuses d'acide chlorhydrique à 10 % en poids et contenant du chlorure de sodium**

| Tableau 8 | | Viscosités (mPa.s) | | |
|---|---|---|---|---|
| Homopolymère CHM en g pour 100 g | | 1,2 | 2,4 | 3,6 |
| | ClNa en g pour 100 g | 0,6 | 1,2 | 1,8 |
| Durées | Températures | | | |
| 0 | 20°C | 50 | 200 | 560 |
| 88 jours | 0°C | 50 | 200 | 560 |
| | 20°C | 50 | 210 | 470 |
| | 40°C | 50 | 210 | 530 |
| Aspect | | limpide | limpide | limpide |

9. Solutions aqueuses d'acide sulfurique à 2 % en poids et contenant du chlorure de sodium

| Tableau 9 | | Viscosités (mPa.s) | | |
|---|---|---|---|---|
| Homopolymère CHM en g pour 100 g | | 1,2 | 2,4 | 3,6 |
| | ClNa en g pour 100 g | 0,6 | 1,2 | 1,8 |
| Durées | Températures | | | |
| 0 | 20°C | 50 | 190 | 510 |
| 114 jours | 0°C | 50 | 190 | 510 |
| | 20°C | 45 | 190 | 500 |
| | 40°C | 50 | 200 | 500 |
| Aspect | | Limpide | Limpide | Limpide |

10. Solutions aqueuses d'acide sulfurique à 10 % en poids et contenant du chlorure de sodium

| Tableau 10 | | Viscosités (mPa.s) | | |
|---|---|---|---|---|
| Homopolymère CHM en g pour 100 g | | 1,2 | 2,4 | 3,6 |
| | ClNa en g pour 100 g | 0,6 | 1,2 | 2,8 |
| Durées | Températures | | | |
| 0 | 20°C | 50 | 200 | 540 |
| 88 jours | 0°C | 50 | 210 | 550 |
| | 20°C | 50 | 200 | 470 |
| | 40°C | 50 | 210 | 530 |
| Aspect | | limpide | limpide | limpide |

11. Solutions aqueuses d'acide sulfurique à 25 % en poids et contenant du chlorure de sodium

| Tableau 11 | | Viscosités (mPa.s) | | |
|---|---|---|---|---|
| Homopolymère CHM en g pour 100 g | | 1,2 | 1,8 | 3,6 |
| ClNa en g pour 100 g | | 0,6 | 1,2 | 1,8 |
| Durées | Températures | | | |
| 0 | 20°C | 70 | 310 | 785 |
| 110 jours | 0°C | 70 | 300 | 760 |
| | 20°C | 90 | 310 | 780 |
| | 40°C | 60 | 300 | 730 |
| Aspect | | limpide | | |

Il va de soi que la présente invention n'a été décrite qu'à titre purement explicatif et nullement limitatif et que toute modification utile pourra y être apportée sans sortir de son cadre tel que défini dans les revendications ci-après.

**Revendications**

1. Solutions aqueuses acides épaissies, de concentration pondérale en acide(s) comprise entre 2 et 30%, de pH inférieur ou égal à 2, présentant une viscosité supérieure à 1 millipascal-seconde déterminée à 20 °C avec un viscosimètre de Brookfield, modèle RVT, équipé d'un axe convenable tournant à la vitesse de 50 tours par minute, stables dans le temps, caractérisées par le fait qu'elles sont épaissies par l'homopolymère du méthacrylate de diméthylaminoéthyle salifié par l'acide chlorhydrique présentant une viscosité intrinsèque comprise entre 4 et 6 dl/g déterminée en solution molaire de NaCl à 25°C.

2. Solutions aqueuses acides épaissies selon la revendication 1, présentant une viscosité inférieure à 2500 mPa.s déterminée à 20°C avec un viscosimètre de Brookfield, modèle RVT, équipé d'un axe convenable tournant à la vitesse de 50 tours par minute caractérisées par le fait qu'elles contiennent une quantité inférieure ou égale à 4 g dudit homopolymère du méthacrylate de diméthylaminoéthyle salifié par l'acide chlorhydrique pour 100 g de solution.

3. Solutions aqueuses acides épaissies selon la revendication 1 ou 2, caractérisées par le fait qu'elles contiennent, seul ou en mélange, un acide protonique minéral ou organique.

4. Solutions aqueuses acides épaissies selon la revendication 3, caractérisées par le fait que l'acide minéral est choisi parmi les suivants: acide chlorhydrique, acide orthophosphorique, acide sulfurique, acide fluorhydrique, hydrogénosulfate de sodium, acide sulfamique, hydrogénodifluorure d'ammonium

5. Solutions aqueuses acides épaissies selon la revendication 3, caractérisées par le fait que l'acide organique est choisi parmi les acides suivants: acide oxalique, acide tartrique, acide malique, acide citrique, acide formique, acide acétique, acide succinique,

6. Solutions aqueuses acides épaissies selon l'une quelconque des revendications 1 à 5, caractérisées par le fait qu'elles contiennent en outre au moins un sel minéral.

7. Solutions aqueuses acides épaissies selon l'une quelconque des revendications 1 à 6, caractérisées par le fait qu'elles peuvent renfermer d'autres additifs nécessaires à leur formulation tels que des colorants, des parfums, des désinfectants et autres additifs connus.

8. Application des solutions aqueuses acides épaissies selon l'une quelconque des revendications 1 à 7 au détartrage industriel ou ménager.

**Claims**

1. Thickened aqueous acid solutions having an acid concentration by weight comprised between 2 and 30 %, a pH lower than, or equal to, 2, and presenting a viscosity higher than 1 millipascal per second as determined at 20°C with a Brookfield viscosimeter, model RVT, equipped with a suitable shaft rotating at the speed of 50 rotations per minute, stable in time, characterised in that they are thickened by the hydrochloric acid salified dimethylaminoethyl methacrylate homopolymer having an intrinsic viscosity of between 4 and 6 dl/g, as determined in a NaCl molar solution at 20°C.

2. Thickened aqueous acid solutions according to Claim 1, having a viscosity lower than 2,500 mPa.s as determined at 20°C with a Brookfield viscosimeter, model RVT, equipped with a suitable shaft, rotating at the speed of 50 rotations per minute, characterized in that they contain a quantity lower than or equal to 4 g of said hydrochloric acid salified dimethylaminoethyl methacrylate homopolymer per 100 g of the solution.

3. Thickened aqueous acid solutions according to Claim 1 or 2, characterized in that they contain a mineral or organic protonic acid, alone or in admixture.

4. Thickened aqueous acid solutions according to Claim 3, characterized in that the mineral salt is selected among the following: hydrochloric acid, orthophosphoric acid, sulfuric acid, hydrofluoric acid, sodium hydrogenosulphate, sulfamic acid, ammonium hydrogenodifluoride.

5. Thickened aqueous acid solutions according to Claim 3, characterized in that the organic acid is selected among the following acids: oxalic acid, tartric acid, malic acid, citric acid, formic acid, acetic acid, succinic acid.

6. Thickened aqueous acid solutions according to any one of Claims 1 to 5, characterized in that they contain moreover at least one mineral salt.

7. Thickened aqueous acid solutions according to any one of Claims 1 to 6, characterized in that they may include other additives as required for their formulation such as colorants, perfumes, disinfectants and other known additives.

8. An application of the thickened aqueous acid solutions according to any one of Claims 1 to 7 to industrial or household descaling.


**Patentansprüche**

1. Verdickte wässrige saure Lösungen mit einer Gewichtskonzentration an Säure(n) zwischen 2 und 30 %, mit einem pH-Wert kleiner oder gleich 2, die eine Viskosität von über 1 mPa.s aufweisen, bestimmt bei 20°C mit einem Viskosimeter nach Brookfield, Modell RVT, ausgerüstet mit einer entsprechenden Achse, die sich mit 50 min$^{-1}$ zeitstabilisiert dreht, dadurch gekennzeichnet, daß die Lösungen durch das Homopolymerisat von mit Chlorwasserstoffsäure versalztem Dimethylaminoethylmethacrylat verdickt sind, welches eine Eigenviskosität zwischen 4 und 6 dl/g aufweist, bestimmt in einer molaren Lösung von NaCl bei 25°C.

2. Verdickte wässrige saure Lösungen nach Anspruch 1 mit einer Viskosität unterhalb von 2500 mPa.s, bestimmt bei 20°C mit einem Viskosimeter nach Brookfield, Modell RVT, ausgerüstet mit einer entsprechenden Achse, die sich mit 50 min$^{-1}$ dreht, dadurch gekennzeichnet, daß die Lösungen eine Menge kleiner oder gleich 4 g des Homopolymerisates von mit Chlorwasserstoffsäure versalzten Dimethylaminoethylmethacrylat pro 100 g Lösung enthalten.

3. Verdickte wässrige saure Lösungen nach Anspruch 1 oder 2, dadurch gekennzeichnet, daß sie allein oder im Gemisch eine anorganische oder organische Protonsäure enthalten.

4. Verdickte wässrige saure Lösungen nach Anspruch 3, dadurch gekennzeichnet, daß die anorganische Säure aus folgenden ausgewählt ist: Chlorwasserstoffsäure, Orthophosphorsäure, Schwefelsäure, Fluorwasserstoffsäure, Natriumbisulfat, Sulfaminsäure, Ammoniumbifluorid.

5. Verdickte wässrige saure Lösungen nach Anspruch 3, dadurch gekennzeichnet, daß die organische Säure aus folgenden Säuren ausgewählt ist: Oxalsäure, Weinsäure, Apfelsäure, Zitronensäure, Ameisensäure, Essigsäure, Bernsteinsäure.

6. Verdickte wässrige saure Lösungen nach einem der Ansprüche 1 bis 5, dadurch gekennzeichnet, daß sie unter anderem mindestens ein anorganisches Salz enthalten.

7. Verdickte wässrige saure Lösungen nach einem der Ansprüche 1 bis 6, dadurch gekennzeichnet, daß sie andere nötige Zusätze in ihren Zusammensetzungen enthalten, z.B. Farbstoffe, Duftstoffe, Desinfektionsstoffe und andere bekannte Zusätze.

8. Anwendung der verdickten wässrigen sauren Lösungen nach einem der Ansprüche 1 bis 7 zur industriellen oder Haushalts-Entkalkung.